# EUROPÄISCHE PATENTSCHRIFT

(11) **EP 1 717 374 B1**
(45) Veröffentlichungstag und Bekanntmachung des Hinweises auf die Patenterteilung: **01.07.2009**
(21) Anmeldenummer: 06112015.0
(22) Anmeldetag: 30.03.2006
(51) Int. Cl.: E02B 8/08, A01K 61/00

(54) **Fisch Auf- und Abstieg**
Fish ascent and descent device
Dispositif d'élévation et de descente pour poisson

(30) Priorität: 26.04.2005 AT 2632005 U
(43) Veröffentlichungstag der Anmeldung: 02.11.2006
(73) Patentinhaber: Jank, Siegfried, 5222 Jeging (AT)
(72) Erfinder: Jank, Siegfried, 5222 Jeging (AT)
(74) Vertreter: KLIMENT & HENHAPEL

(56) Entgegenhaltungen:
- WO-A-03/083223
- AT-B- 411 368
- DE-U1- 29 703 497
- US-A- 1 680 722

## Beschreibung

Die Erfindung betrifft eine Schleuse zum Überführen gewässertypischer Organismen zwischen Ober- und Unterwasser von Fließgewässern mit einer aus Seitenwänden sowie einem Boden bestehenden, beckenartig ausgebildeten Schleusenkammer deren Wasserpegel stets kleiner oder gleich jenem des Oberwassers ist, mit einem oberwasserseitigen Schleusentor welches das Oberwasser bis zu einem gewünschten Pegelstand zurückstaut, und einem unterwasserseitigen Schleusentor welches das Wasser in der Schleusenkammer gegenüber dem Unterwasser zurückstaut, ausgestattet ist, wobei das ober- und unterwasserseitige Schleusentor jeweils ein bewegliches Element zum Herstellen und Verschließen einer Einlass- bzw. Auslassöffnung vom Ober- bzw. Unterwasser in die Schleusenkammer umfassen, und wobei das unterwasserseitige Schleusentor mit zumindest einer permanenten Unterwasser-Durchtrittsöffnung versehen ist, die im Schließzustand des dem unterwasserseitigen Schleusentor zugeordneten beweglichen Elements das unterwasserseitige Schleusentor durchsetzt, gemäß dem Oberbegriff von Anspruch 1.

Ein Fließgewässer-Ökosystem ist als Kontinuum von seiner Quelle bis zur Mündung aufzufassen. Eine Voraussetzung für eine naturgemäße Gewässerentwicklung ist es daher, dass ein weitestgehend ungestörter Wasser- und Stofftransport ermöglicht ist. Auf eine solche Durchgängigkeit sind die meisten gewässertypischen Organismen angewiesen.

Ein wesentlicher Bestandteil der Lebensstrategie vieler in Fließgewässern lebender Tierarten sind regelmäßig oder auch unregelmäßig stattfindende Ortsveränderungen. Als bekannteste Beispiele können hierfür der Lachs, der Aal oder der Stör genannt werden, die zum Aufsuchen ihrer Laichgründe mitunter mehrere tausend Kilometer zurücklegen können. Neben diesen Wanderfischen führen aber auch einheimische Fischarten, wie etwa die Forelle, sowie wirbellose Organismen jahreszeitliche Wanderungen zu Laichgründen, Winter- oder Sommerlebensräume durch. Aber auch der Austausch von Mikroorganismen, pflanzlicher Bestandteile sowie die Wasserchemie bestimmender Stoffe zwischen unterschiedlichen Abschnitten von Fließgewässern sind wichtige Faktoren für ein naturnahes Funktionieren des Ökosystems.

Die Durchgängigkeit von Fließgewässern, die einer technischen Nutzung unterworfen sind, ist jedoch durch wasserbauliche Barrieren unterbrochen. Zur Wiederherstellung der Durchgängigkeit der Fließgewässer für Fische und andere aquatische Lebewesen werden daher Fischaufstiegsanlagen unterschiedlicher Ausführung verwendet, um Aufstiegshindernisse passierbar zu machen. Darüber hinaus ist auch aufgrund bereits bestehender und in naher Zukunft zu erwartender Rechtsvorschriften eine Durchgängigkeit von Fließgewässern trotz wasserbaulicher Barrieren zu gewährleisten.

Dabei kann zwischen naturnahen und technischen Aufstiegshilfen unterschieden werden. Zu den naturnahen Bauweisen zählen etwa Umgehungsgerinne und Fischrampen. Bei Umgehungsgerinnen wird eine wasserbauliche Barriere, etwa ein Wehr, eine Sohlstufe oder auch ein Wasserkraftwerk, in Form eines naturnah gestalteten Gewässerlaufs relativ weiträumig umgangen. Fischrampen verfügen über geringere Breiten und sind in einem Teilbereich etwa einer Wehranlage integriert.

Oft sind jedoch die lokalen Verhältnisse nicht dazu geeignet, Fischaufstiegshilfen in naturnaher Bauweise einzurichten. Das ist etwa der Fall, wenn die Platzverhältnisse kein weiträumiges Umgehen erlauben. Daher wurden auch technische Aufstiegshilfen geschaffen, etwa Fischaufzüge bzw. Fischschleusen, die das Überführen gewässertypischer Organismen zwischen Ober- und Unterwasser wasserbaulicher Barrieren ermöglichen.

Herkömmliche Fischschleusen gemäß dem Stand der Technik funktionieren ähnlich einer Schiffsschleuse. Im Randbereich einer wasserbaulichen Anlage ist dabei eine Schleusenkammer vorgesehen, die von zwei Schleusentoren abgeschlossen wird. Eines dieser Schleusentore ist dem Oberwasser zugewandt, und das andere dem Unterwasser. Die Schleusentore können entweder mit einem Schütz ausgestattet sein, oder mit einer um eine vertikale Achse verschwenkbaren Absperrwand. Wird bei gefüllter Schleusenkammer und geschlossenem oberwasserseitigen Schleusentor das unterwasserseitige Schleusentor geöffnet, so kommuniziert die Schleusenkammer mit dem Unterwasser und Wasseraustausch findet statt. Auf diese Weise gelangen gewässertypische Organismen in die Schleusenkammer. Da etwa Fische zumeist der Hauptströmung entlang des Ufers folgen, muss die Fischschleuse so betrieben werden, dass über einen ausreichend langen Zeitraum eine ausreichende Wasserströmung sichergestellt ist, da die gegen die Wasserströmung wandernden Fische die Aufstiegshilfe ansonsten nicht finden würden. Daher wird das oberwasserseitige Schleusentor geringfügig geöffnet, damit das aus dem Oberwasser in die Schleusenkammer nachströmende Wassers die Entleerzeit der Schleusenkammer verzögert. Die aus der Schleusenkammer in das Unterwasser abfließende Wassermenge erzeugt dabei eine Wasserströmung, die von den Organismen als natürliche Gewässerströmung wahrgenommen wird, und ihnen das Auffinden der Schleusenkammer ermöglicht. Diese Wasserströmung wird daher auch als Leit-oder Lockströmung bezeichnet.

Sobald der Wasserstand in der Schleusenkammer auf ein bestimmtes Niveau gesunken ist, wird das unterwasserseitige Schleusentor geschlossen, und das oberwasserseitige Schleusentor geöffnet. Das in die Schleusenkammer vom Oberwasser einströmende Wasser erzeugt wiederum eine Lockströmung, die den Organismen in der Schleusenkammer das Auffinden der oberwasserseitigen Öffnung ermöglicht. Wahlweise kann das unterwasserseitige Schleusentor wieder geringfügig geöffnet werden, um das Füllen der Schleusenkammer zu verzögern, und den Organismen ausreichend Zeit zu geben, die Schleusenkammer in Richtung Oberwasser zu verlassen.

Es ist ersichtlich, dass der Betrieb einer solchen herkömmlichen Fischschleuse mitunter erheblichen Aufwand verursacht, da beim Entleeren und Befüllen der Schleusenkammer darauf geachtet werden muss, dass die Befüll- und Entleerzeiten durch geringfügiges Öffnen von ober- und unterwasserseitigem Schleusentor geeignet gestaltet werden. Bei unsachgemäßem Betrieb der Schleuse kann die Funktion der Fischaufstiegshilfe überhaupt gefährdet sein, etwa wenn sich keine geeigneten Lockströmungen ergeben, oder der Wasseraustausch zu schnell vorgenommen wird, sodass das naturnahe Überführen von Organismen zwischen Ober- und Unterwasser beeinträchtigt wird. Außerdem ist zeitweise zumindest die Verbindung zwischen Unterwasser und der Schleusenkammer unterbunden, nämlich wenn das unterwasserseitige Schleusentor gänzlich geschlossen ist. Des weiteren ist beim Betrieb der Schleusenkammer auf unterschiedliche hydrologische Verhältnisse, etwa Stärke der Wasserströmung und Wasserdurchflussmenge im betreffenden Flussabschnitt, abzustellen.

Aus der US 2,922,282 ist eine Fischleiter mit mehreren, stufenartig angeordneten Trennwänden bekannt, welche in ihrem Rand- oder Mittenbereich mit Öffnungen versehen sind und wobei selbige Öffnungen über einen beidseitig der Öffnungen geführten, wahlweise mit einem Durchbruch versehenen Schieber verschließbar sind. Die unterhalb des Wasserspiegels angeordneten Öffnungen sind dabei an starren Trennwänden angeordnet. Während die US 2,922,282 eine kaskadenartige Fischleiter vorschlägt, mit welcher die Höhendifferenz des Wasserspiegels von Ober- und Unterwasser überwunden werden soll, so soll in der vorliegenden Erfindung hingegen eine unmittelbar zwischen Ober- und Unterwasser vermittelnde Fischschleuse mit flexiblen Eigenschaften vorgesehen sein.

Aus der DE 297 03 497 U1 ist des weiteren eine Fischpassage-Einrichtung an Wasserstauwerken bekannt, wobei sich ein rohrförmiger Schacht vorgesehen ist, welcher sich bis zum obersten Punkt einer Staumauer und von dort wieder hinunter bis unter die auf der anderen Seite der Staumauer befindliche Wasseroberfläche erstreckt. Die endseitigen Ein- bzw. Auslauföffnungen sind mittels eines linear verfahrbaren Schiebers verschließbar.

Die US 1 680 722 A offenbart einen vertikal an einer Staumauer verlaufenden Fischaufzug, welcher mit einem aufwändigen Schiebersystem versehen ist: Ein rohrförmiger Schacht ist unterwasserseitig mit einer ersten Öffnung versehen. Eine mit einer zweiten Öffnung versehene Platte ist in vertikalen Führungsschienen verfahrbar und wird mittels einer ersten hydraulischen Vorrichtung betätigt. Die erste hydraulische Vorrichtung dient dazu, die Oberkante der Öffnung an den Pegel des Unterwassers anzupassen. Die Platte weist wiederum vertikale Führungsschienen auf, in welchen ein weiteres plattenförmiges Schließelement verfahrbar gehalten ist. Dieses wird über eine an der Platte montierte, zweite hydraulische Vorrichtung betätigt, sodass der Querschnitt der Öffnung variiert werden kann. Oberwasserseitig ist ebenfalls ein hydraulisch betätigbares Schließelement vorgesehen, welches eine Öffnung variabel verschließt, bzw. öffnet. Wird das unterwasserseitige Schließelement verschlossen und das oberwasserseitige Schließelement geöffnet, so bewirkt das Hereinströmen des Oberwassers ein selbsttätiges Aufschwimmen eines im Schacht befindlichen Gitterrostes, welcher die zuvor in den Schacht eingeschwommenen Fische zwangsweise ans Oberwasser befördert.

Es ist das Ziel der Erfindung, den Betrieb einer Fischschleuse durch geeignete bauliche Maßnahmen zu vereinfachen. Unsachgemäßer Bedienung soll dadurch weitestgehend vorgebeugt und eine Automatisierung ermöglicht werden. Des weiteren soll auf ein möglichst naturnahes Überführen von Organismen zwischen Ober- und Unterwasser Rücksicht genommen werden, indem die Befüllung und Entleerung der Schleusenkammer möglichst behutsam durchführbar ist.

Diese Ziele werden durch die Maßnahmen von Anspruch 1 erreicht. Anspruch 1 bezieht sich auf eine Schleuse zum Überführen gewässertypischer Organismen zwischen Ober- und Unterwasser von Fließgewässern mit einer aus Seitenwänden sowie einem Boden bestehenden, beckenartig ausgebildeten Schleusenkammerderen Wasserpegel stets kleiner oder gleich jenem des Oberwassers ist, mit einem oberwasserseitigen Schleusentor welches das Oberwasser bis zu einem gewünschten Pegelstand zurückstaut, und einem unterwasserseitigen Schleusentor, welches das Wasser in der Schleusenkammer gegenüber dem Unterwasser zurückstaut, ausgestattet ist, wobei das ober- und unterwasserseitige Schleusentor jeweils ein bewegliches Element zum Herstellen und Verschließen einer Einlass- bzw. Auslassöffnung vom Ober- bzw. Unterwasser in die Schleusenkammer umfassen, und wobei das unterwasserseitige Schleusentor mit zumindest einer permanenten Unterwasser-Durchtrittsöffnung versehen ist, die im Schließzustand des dem unterwasserseitigen Schleusentor zugeordneten beweglichen Elements das unterwasserseitige Schleusentor durchsetzt.

Erfindungsgemäß ist nun vorgesehen, dass das oberwasserseitige Schleusentor mit zumindest einer permanenten Oberwasser-Durchtrittsöffnung versehen ist, die sich zumindest abschnittsweise unterhalb des Oberwasserstandes befindet und im Schließzustand des dem oberwasserseitigen Schleusentor zugeordneten beweglichen Elements das oberwasserseitige Schleusentor durchsetzt, wobei sowohl das oberwasserseitige Schleusentor als auch das unterwasserseitige Schleusentor im Wesentlichen bis zum Boden der Schleusenkammer hinunterreichen, dessen Niveau an seinen der Oberwasserseite bzw. der Unterwasserseite zugewandten Endbereichen jeweils im Wesentlichen dem Niveau des Grundpegels von Oberwasser bzw. Unterwasser entspricht.

Bei den beweglichen Elementen kann es sich etwa um ein Schütz handeln, oder auch um andere technische Lösungen zum Herstellen und Verschließen einer Einlass- bzw. Auslassöffnung vom Ober- bzw. Unterwasser in die Schleusenkammer, wie im folgenden noch ausgeführt werden wird.

Durch diese erfindungsgemäßen Maßnahmen werden somit permanente Öffnungen in den beiden Schleusentoren sichergestellt. Somit wird etwa bei geschlossenem, unterwasserseitigen Schleusentor der Durchtritt von Wasser aus der Schleusenkammer in das Unterwasser und somit das Einstellen einer Wasserströmung ermöglicht, und das Befüllen der Schleusenkammer automatisch verzögert. Außerdem wird durch die Durchtritts-Öffnungen im oberwasserseitigen Schleusentor das Entleeren der Schleusenkammer bei geöffnetem, unterwasserseitigen Schleusentor verzögert. Das sorgt für ein behutsames Befüllen und Entleeren der Schleusenkammer, ohne dass hierfür eine aufwändige Betriebsführung der Schleusentore erforderlich wäre. Der gesamte lichte Querschnitt der Durchtritts-Öffnungen im ober- und unterwasserseitigen Schleusentor kann außerdem bereits bei der Auslegung der Fischschleuse auf die jeweiligen hydrologischen Verhältnisse abgestimmt werden. Das ansonsten im täglichen Betrieb erforderliche, geringfügige Öffnen der Schleusentore, wie es oben beschrieben wurde, und der damit verbundene Betriebsaufwand entfällt.

Anspruch 2 schlägt eine mögliche Ausführungsform des unterwasserseitigen Schleusentores vor. Gemäß Anspruch 2 ist das unterwasserseitige Schleusentor als ortsfeste Absperrwand ausgeführt, und das dem unterwasserseitigen Schleusentor zugeordnete bewegliche Element als eine an der Absperrwand angelenkte Klappe, wobei die zumindest eine Unterwasser-Durchtrittsöffnung als Durchbruch in der Klappe ausgeführt ist.

Anspruch 3 schlägt eine mögliche Ausführungsform des oberwasserseitigen Schleusentores vor. Gemäß Anspruch 3 ist das dem oberwasserseitigen Schleusentor zugeordnete bewegliche Element als eine um eine senkrechte Achse verschwenkbare Absperrwand ausgeführt, wobei sich die zumindest eine Oberwasser-Durchtrittsöffnung entlang der der Schwenkachse abgewandten, vertikalen Kante der verschwenkbaren Absperrwand befindet.

Anspruch 4 schlägt eine bevorzugte Ausführungsform der Durchtritts-Öffnungen vor. Gemäß Anspruch 4 ist vorgesehen, dass der gesamte lichte Querschnitt der zumindest einen im oberwasserseitigen Schleusentor angeordneten Oberwasser-Durchtrittsöffnung den gesamten lichten Querschnitt der zumindest einen im unterwasserseitigen Schleusentor angeordneten Unterwasser-Durchtrittsöffnung übersteigt. Bei geschlossenen Schleusentoren fließt daher immer mehr Wasser in die Schleusenkammer zu, als aus ihr abfließt.

Gemäß Anspruch 5 ist der lichte Querschnitt der Unter- und Oberwasser-Durchtrittsoffnungen verstellbar. Dadurch kann die Fischschleuse an unterschiedliche hydrologische Bedingungen, etwa variierende Wasserströmung oder Wasserdurchflussmenge in dem betreffenden Gewässerabschnitt, angepasst werden.

Gemäß Anspruch 6 ist vorgesehen, dass die die Schleusentore verbindenden, vertikalen Seitenwände der Schleusenkammer nach außen gewölbt sind, sodass die Breite der Schleusenkammer normal zur Verbindungslinie der beiden Schleusentore variiert. Dadurch wird ein entlang der Breite der Schleusenkammer variierendes Strömungsprofil geschaffen, insbesondere ist die Wasserströmung im Nahbereich der Seitenwände geringer als in den zentralen Bereichen. Das ist deshalb vorteilhaft, weil etwa für unterschiedliche Fischarten unterschiedliche Stärken der Wasserströmungen optimal sind. Für schwimmschwache Arten oder Jungfische werden somit in den Nahbereichen der Seitenwände der Schleusenkammer optimale Durchtrittswege durch die Schleuse geschaffen.

Gemäß Anspruch 7 weist der Boden der Schleusenkammer ein Gefälle vom Oberwasser in Richtung Unterwasser auf. Insbesondere in diesem Fall erweisen sich die Maßnahmen gemäß Anspruch 8 als vorteilhaft. Anspruch 8 sieht vor, dass der Boden der Schleusenkammer mit einem Steigfell versehen ist. Dadurch kann etwa Krebsen oder anderen, bodennah lebenden Organismen der Durchtritt durch die Schleuse erleichtert werden.

Die erfndungsgemäßen Merkmale ermöglichen die besonders vorteilhafte Ausführung gemäß Anspruch 9, der zu Folge mithilfe einer zeitlichen Steuerung das periodische Öffnen und Schließen der beweglichen Elemente automatisiert und abgestimmt auf die im betreffenden Fließgewässer vorherrschenden hydrologischen Verhältnisse erfolgt.
Die Erfindung wird im folgenden anhand der beiliegenden Zeichnungen näher erläutert. Hierbei zeigen die
Fig.1 eine Seitenansicht einer Ausführungsform einer erfindungsgemäßen Fischschleuse entlang der Schnittlinie A-A von Fig.4,
Fig.2 eine Ansicht entlang der Schnittlinie B-B von Fig. 1 des oberwasserseitigen Schleusentores von der Schleusenkammer Richtung Oberwasser gesehen,
Fig.3 eine Ansicht entlang der Schnittlinie C-C von Fig. 1 des unterwasserseitigen Schleusentores vom Unterwasser in Richtung der Schleusenkammer gesehen, und
Fig.4 einen Grundriss einer Ausführungsform einer erfindungsgemäßen Fischschleuse gemäß der Fig. 1, wobei das oberwasserseitige Schleusentor in einer offenen und einer geschlossenen Position dargestellt ist.

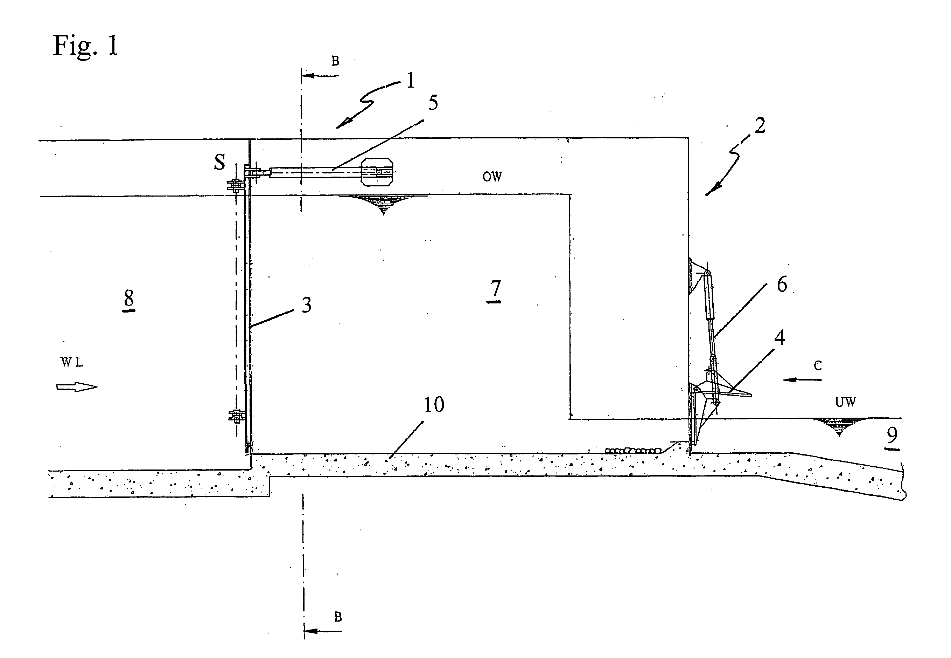

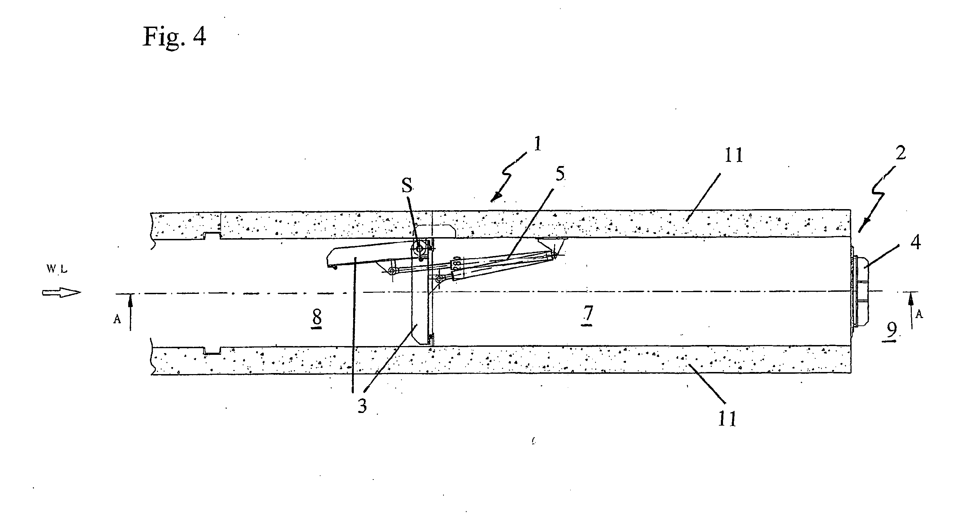

In der Fig.1 ist eine Seitenansicht einer Ausführungsform einer erfindungsgemäßen Fischschleuse entlang der Schnittlinie A-A von Fig.4 dargestellt. Die Fischschleuse besteht im wesentlichen aus einer Schleusenkammer 7, die zwei parallel zueinander und in Fließrichtung WL verlaufende Seitenwände 11, sowie einen Boden 10 umfasst. Die Schleusenkammer 7 ist in Richtung des Oberwassers 8 (in den Fig.1 bis 4 auch als "OW" eingezeichnet) durch ein oberwasserseitiges Schleusentor 1 begrenzt, und in Richtung des Unterwassers 9 (in den Fig.1 bis 4 auch als "UW" eingezeichnet) durch ein unterwasserseitiges Schleusentor 2.

Sowohl das oberwasserseitige Schleusentor 1 als auch das unterwasserseitige Schleusentor 2 reichen im Wesentlichen bis zum Boden 10 der Schleusenkammer 7 hinunter, dessen Niveau an seinen der Oberwasserseite bzw. der Unterwasserseite zugewandten Endbereichen jeweils im Wesentlichen dem Niveau des Grundpegels von Oberwasser bzw. Unterwasser entspricht.

Wie insbesondere in den Fig.1 und 4 ersichtlich ist, umfasst das oberwasserseitige Schleusentor 1 in der gezeigten Ausführungsform eine um eine senkrechte Achse S verschwenkbare Absperrwand 3, sowie eine Hydraulikvorrichtung 5, die die Schwenkbewegung der Absperrwand 3 bewirkt. Die Absperrwand 3 stellt somit das bewegliche Element 3 zum Herstellen und Verschließen einer Einlass- bzw. Auslassöffnung vom Oberwasser 8 in die Schleusenkammer 7 des oberwasserseitigen Schleusentores 1 dar. Die Hydraulikvorrichtung 5 setzt dabei an einer der Seitenwände 11 an.

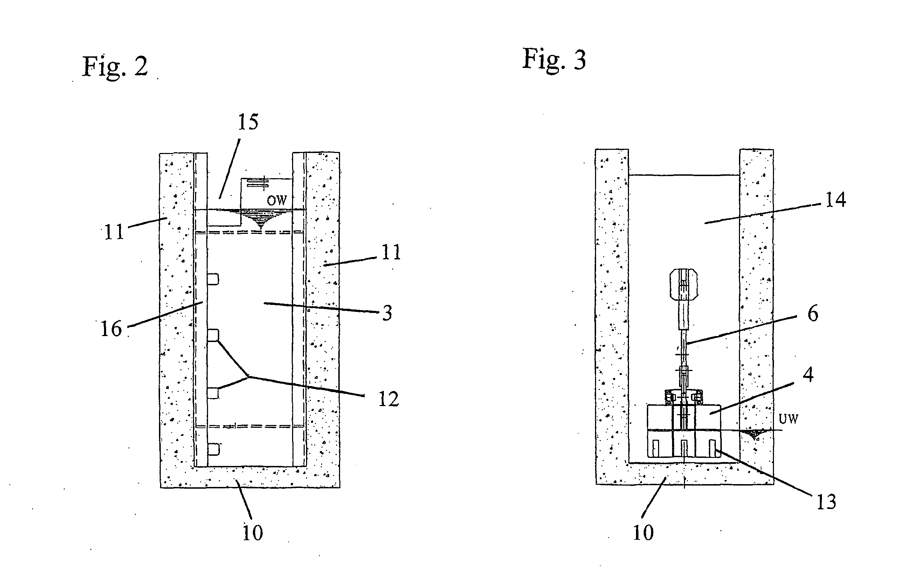

Wie insbesondere aus der Fig. 2 ersichtlich ist, weist die Absperrwand 3 des weiteren zumindest eine Oberwasser-Durchtrittsöffnung 12 auf, in der Fig.2 sind z.B. vier Öffnungen 12 dargestellt, die entlang der der Schwenkachse S abgewandten, vertikalen Kante 16 der verschwenkbaren Absperrwand 3 angeordnet sind. Diese Oberwasser-Durchtrittsöffnungen 12 befinden sich außerdem zumindest abschnittsweise unterhalb des Oberwasserstandes, und sind erfindungsgemäß von dem dem oberwasserseitigen Schleusentor 1 zugeordneten beweglichen Element 3 nicht abdeckbar, da sie am beweglichen Element 3, also der Absperrwand 3, angeordnet sind. Vielmehr sind unabhängig vom Öffnungszustand der Absperrwand 3 die Durchtrittsöffnungen 12 stets geöffnet, da sie auch im Schließzustand der Absperrwand 3 das oberwasserseitige Schleusentor 1 durchsetzen. Wahlweise kann die Absperrwand 3 auch eine an ihrer oberen Kante angeordnete Krone 15 aufweisen.

Wie insbesondere aus der Fig.3 ersichtlich ist, umfasst das unterwasserseitige Schleusentor 2 in der gezeigten Ausführungsform eine ortsfeste Absperrwand 14, sowie eine Hydraulikvorrichtung 6, die eine an der ortsfesten Absperrwand 14 angelenkte Klappe 4 bewegt. Die Klappe 4 stellt somit das bewegliche Element 4 des unterwasserseitigen Schleusentores 2 zum Herstellen und Verschließen einer Einlass- bzw. Auslassöffnung vom Unterwasser 9 in die Schleusenkammer 7 dar. Die Hydraulikvorrichtung 6 setzt dabei an der ortsfesten Absperrwand 14 an.

Wie insbesondere aus der Fig.3 ersichtlich ist, weist die Klappe 4 des weiteren zumindest eine Unterwasser-Durchtrittsöffnung 13 auf, in der Fig.3 sind z.B. drei Öffnungen 13 dargestellt, die als Durchbruch in der Klappe 4 ausgeführt sind. Diese Unterwasser-Durchtrittsöffnungen 13 befinden sich außerdem zumindest abschnittsweise unterhalb des Unterwasserstandes, und sind erfindungsgemäß von dem dem unterwasserseitigen Schleusentor 2 zugeordneten beweglichen Element 4 nicht abdeckbar, da sie am beweglichen Element 4, also der Klappe 4, angeordnet sind. Vielmehr sind unabhängig vom Öffnungszustand der Klappe 4 die Durchtrittsöffnungen 13 stets geöffnet, da sie auch im Schließzustand der Klappe 4 das unterwasserseitige Schleusentor 2 durchsetzen.

Vorzugsweise sind die Durchtritts-Öffnungen 12, 13 so ausgeführt, dass der gesamte lichte Querschnitt der zumindest einen im oberwasserseitigen Schleusentor 1 angeordneten Oberwasser-Durchtrittsöffnung 12 den gesamten lichten Querschnitt der zumindest einen im unterwasserseitigen Schleusentor 2 angeordneten Unterwasser-Durchtrittsöffnung 13 übersteigt. Bei geschlossenen Schleusentoren 1, 2 fließt daher immer mehr Wasser in die Schleusenkammer 7 zu, als aus ihr abfließt. Des weiteren sollte der lichte Querschnitt der Unter- und Oberwasser-Durchtrittsöffnungen 12, 13 verstellbar sein, etwa über einen Schieber-Mechanismus. Dadurch kann die Fischschleuse an unterschiedliche hydrologische Bedingungen, etwa variierende Wasserströmung oder Wasserdurchflussmenge in dem betreffenden Gewässerabschnitt, angepasst werden.

Die die Schleusentore 1, 2 verbindenden, vertikalen Seitenwände 11 der Schleusenkammer 7 müssen nicht unbedingt parallel zueinander und in Fließrichtung WL verlaufen, so wie dies in der Fig.4 dargestellt ist. Es ist stattdessen auch möglich, dass die Seitenwände 11 nach außen gewölbt sind, sodass die Breite der Schleusenkammer 7 normal zur Verbindungslinie A-A (siehe Fig.4) der beiden Schleusentore variiert. Dadurch wird ein entlang der Breite der Schleusenkammer 7 variierendes Strömungsprofil geschaffen, insbesondere ist die Wasserströmung im Nahbereich der Seitenwände 11 geringer als in den zentralen Bereichen. Das ist deshalb vorteilhaft, weil etwa für unterschiedliche Fischarten unterschiedliche Stärken der Wasserströmungen optimal sind. Für schwimmschwache Arten oder Jungfische werden somit in den Nahbereichen der Seitenwände 11 der Schleusenkammer 7 optimale Durchtrittswege durch die Schleuse geschaffen.

Es sind auch alternative Ausführungsformen für die beiden Schleusentore 1, 2 möglich, so könnten etwa auch Gummischleusen zum Herstellen und Verschließen einer Einlass- bzw. Auslassöffnung vom Ober- bzw. Unterwasser 8, 9 in die Schleusenkammer 7 vorgesehen sein.

Weist der Boden 10 der Schleusenkammer 7 ein erhebliches Gefälle auf, so kann er auch mit einem Steigfell versehen sein. Dadurch kann etwa Krebsen oder anderen, bodennah lebenden Organismen der Durchtritt durch die Schleuse erleichtert werden.

Die erfindungsgemäße Fischschleuse wird nun folgendermaßen betrieben. Wird bei gefüllter Schleusenkammer 7 und geschlossenem oberwasserseitigen Schleusentor 1 das unterwasserseitige Schleusentor 2 durch Öffnen der Klappe 4 geöffnet, so fließt Wasser aus der Schleusenkammer 7 in das Unterwasser 9 ab. Aufgrund der im oberwasserseitigen Schleusentor 1 vorgesehenen Oberwasser-Durchtrittsöffnungen 12 dringt aber laufend Wasser aus dem Oberwasser 8 in die Schleusenkammer 7 ein, was die Entleerzeit der Schleusenkammer 7 verzögert. Dadurch wird die durch das unterwasserseitig ausströmende Wasser erzeugte Lockströmung über einen verlängerten Zeitraum aufrechterhalten, was den gegen die Wasserströmung wandernden Fischen oder anderen Lebewesen das Auffinden der Aufstiegshilfe erleichtert, ohne dass eine besondere Betriebsführung des oberwasserseitigen Schleusentores 1 vonnöten wäre. Das oberwasserseitige Schleusentor 1 bleibt einfach während der Entleerphase geschlossen. Die aus der Schleusenkammer 7 in das Unterwasser 9 abfließende Wassermenge erzeugt dabei eine Wasserströmung, die von den Organismen als natürliche Gewässerströmung wahrgenommen wird.

Sobald der Wasserstand in der Schleusenkammer 7 auf ein bestimmtes Niveau abgesunken ist, wird das unterwasserseitige Schleusentor 2 geschlossen, indem die Klappe 4 geschlossen wird. Da der gesamte lichte Querschnitt der im oberwasserseitigen Schleusentor 1 angeordneten Oberwasser-Durchtrittsöffnungen 12 den gesamten lichten Querschnitt der im unterwasserseitigen Schleusentor 2 angeordneten Unterwasser-Durchtrittsöffnung 13 übersteigt, fließt daher immer mehr Wasser in die Schleusenkammer 7 zu, als aus ihr abfließt. Die Schleusenkammer 7 wird sich daher allmählich füllen, wobei das durch die Oberwasser-Durchtrittsöffnungen 12 strömende Wasser jene Lockströmung darstellt, die den Organismen in der Schleusenkammer 7 das Auffinden des Oberwassers 8 ermöglicht. Wahlweise kann auch das oberwasserseitige Schleusentor 1 teilweise geöffnet werden, indem die Absperrwand 3 in Richtung Oberwasser 8 verschwenkt wird. Das kann etwa dann erforderlich sein, wenn aufgrund jahreszeitlich veränderter hydrologischer Bedingungen das Fließgewässer höhere Wassermengen führt.

Die trotz geschlossener Klappe 4 offenen Unterwasser-Durchtrittsöffnungen 13 bewirken dabei einerseits eine Verzögerung der Füllzeit für die Schleusenkammer 7, stellen aber andererseits auch während der Füllzeit der Schleusenkammer 7 eine Lockströmung im Unterwasser 9 her.

Sobald der Wasserstand in der Schleusenkammer 7 auf ein bestimmtes Niveau gestiegen ist, kann das oberwasserseitige Schleusentor 1 geöffnet werden, um einen vollständigen Wasseraustausch zwischen Oberwasser 8 und der Schleusenkammer 7 zu beschleunigen. Nach dem Schließen des oberwasserseitigen Schleusentores 1 beginnt der Zyklus von neuem.

Die erfindungsgemäßen Merkmale ermöglichen die besonders vorteilhafte Ausführung, der zu Folge mithilfe einer zeitlichen Steuerung das periodische Öffnen und Schließen der beweglichen Elemente 3, 4 automatisiert und abgestimmt auf die im betreffenden Fließgewässer vorherrschenden hydrologischen Verhältnisse erfolgt.

Es ist ersichtlich, dass mithilfe einer erfindungsgemäßen Fischschleuse auch das Überführen gewässertypischer Organismen vom Oberwasser 8 in das Unterwasser 9 möglich ist. Diese Variante ist aber weniger problematisch als der oben beschriebene Fall des Überführens von Organismen vom Unterwasser 9 in das Oberwasser 8, da die Lebewesen nun mit der Wasserströmung wandern, und eine entsprechende Lockströmung aufgrund des Gefälles zwischen Oberwasser 8 und Unterwasser 9 leichter herzustellen ist.

Durch die erfindungsgemäße Maßnahme der permanenten Durchtritts-Öffnungen 12, 13 in den beiden Schleusentoren 1, 2 wird somit ein behutsames Befüllen und Entleeren der Schleusenkammer 7 erreicht, ohne dass hierfür eine aufwändige Betriebsführung der Schleusentore 1, 2 erforderlich wäre. Der gesamte lichte Querschnitt der Durchtritts-Öffnungen 12, 13 im ober- und unterwasserseitigen Schleusentor 1, 2 kann außerdem bereits bei der Auslegung der Fischschleuse auf die jeweiligen hydrologischen Verhältnisse abgestimmt werden. Das ansonsten im täglichen Betrieb erforderliche, geringfügige Öffnen der Schleusentore 1, 2 und der damit verbundene Betriebsaufwand entfällt. Aufgrund der guten Eigenschaften der erfindungsgemäßen Fischschleuse hinsichtlich eines behutsamen Organismus- und Wasseraustausches zwischen Ober- und Unterwasser 8, 9 ist der Einbau der Schleuse auch in jenen Fällen interessant, in denen etwa bereits eine herkömmliche Fischleiter vorhanden ist.

## Patentansprüche

1. Schleuse zum Überführen gewässertypischer Organismen zwischen Ober- und Unterwasser (8, 9) von Fließgewässern mit einer aus Seitenwänden (11) sowie einem Boden (10) bestehenden, beckenartig ausgebildeten Schleusenkammer (7) deren Wasserpegel stets kleiner oder gleich jenem des Oberwassers ist, mit einem oberwasserseitigen Schleusentor (1), welches das Oberwasser bis zu einem gewünschten Pegelstand zurückstaut, und einem unterwasserseitigen Schleusentor (2), welches das Wasser in der Schleusenkammer gegenüber dem Unterwasser zurückstaut, ausgestattet ist, wobei das ober- und unterwasserseitige Schleusentor (1, 2) jeweils ein bewegliches Element (3, 4) zum Herstellen und Verschließen einer Einlass- bzw. Auslassöffnung vom Ober- bzw. Unterwasser (8, 9) in die Schleusenkammer (7) umfassen, und wobei das unterwasserseitige Schleusentor (2) mit zumindest einer permanenten Unterwasser-Durchtrittsöffnung (13) versehen ist, die im Schließzustand des dem unterwasserseitigen Schleusentor (2) zugeordneten beweglichen Elements (4) das unterwasserseitige Schleusentor (2) durchsetzt, **dadurch gekennzeichnet, dass** das oberwasserseitige Schleusentor (1) mit zumindest einer permanenten Oberwasser-Durchtrittsöffnung (12) versehen ist, die sich zumindest abschnittsweise unterhalb des Oberwasserstandes befindet und im Schließzustand des dem oberwasserseitigen Schleusentor (1) zugeordneten beweglichen Elements (3) das oberwasserseitige Schleusentor durchsetzt, wobei sowohl das oberwasserseitige Schleusentor (1) als auch das unterwasserseitige Schleusentor (2) im Wesentlichen bis zum Boden (10) der Schleusenkammer (7) hinunterreichen, dessen Niveau an seinen der Oberwasserseite bzw. der Unterwasserseite zugewandten Endbereichen jeweils im Wesentlichen dem Niveau des Grundpegels von Oberwasser bzw. Unterwasser entspricht.

2. Schleuse nach Anspruch 1, **dadurch gekennzeichnet, dass** das unterwasserseitige Schleusentor (2) als ortsfeste Absperrwand (14) ausgeführt ist, und das dem unterwasserseitigen Schleusentor (2) zugeordnete bewegliche Element (4) als eine an der Absperrwand (14) angelenkte Klappe (4), wobei die zumindest eine Unterwasser-Durchtrittsöffnung (13) als Durchbruch in der Klappe (4) ausgeführt ist.

3. Schleuse nach Anspruch 1 oder 2, **dadurch gekennzeichnet, dass** das dem oberwasserseitigen Schleusentor (1) zugeordnete bewegliche Element (3) als eine um eine senkrechte Achse (S) verschwenkbare Absperrwand (3) ausgeführt ist, und sich die zumindest eine Oberwasser-Durchtrittsöffnung (12) entlang der der Schwenkachse (S) abgewandten, vertikalen Kante (16) der verschwenkbaren Absperrwand (3) befindet.

4. Schleuse nach einem der Ansprüche 1 bis 3, **dadurch gekennzeichnet, dass** der gesamte lichte Querschnitt der zumindest einen im oberwasserseitigen Schleusentor (1) angeordneten Oberwasser-Durchtrittsöffnung (12) den gesamten lichten Querschnitt der zumindest einen im unterwasserseitigen Schleusentor (2) angeordneten Unterwasser-Durchtrittsöffnung (13) übersteigt.

5. Schleuse nach einem der Ansprüche 1 bis 4, **dadurch gekennzeichnet, dass** der lichte Querschnitt der Unter-und Oberwasser-Durchtrittsöffnungen (12, 13) verstellbar ist.

6. Schleuse nach einem der Ansprüche 1 bis 5, **dadurch gekennzeichnet, dass** die die Schleusentore (1, 2) verbindenden, vertikalen Seitenwände (11) der Schleusenkammer (7) nach außen gewölbt sind, sodass die Breite der Schleusenkammer (7) normal zur Verbindungslinie (A-A) der beiden Schleusentore variiert.

7. Schleuse nach einem der Ansprüche 1 bis 6, **dadurch gekennzeichnet, dass** der Boden (10) der Schleusenkammer (7) ein Gefälle vom Oberwasser (8) in Richtung Unterwasser (9) aufweist.

8. Schleuse nach Anspruch 7, **dadurch gekennzeichnet, dass** der Boden (10) der Schleusenkammer (7) mit einem Steigfell versehen ist.

9. Schleuse nach einem der Ansprüche 1 bis 8, **dadurch gekennzeichnet, dass** mithilfe einer zeitlichen Steuerung das periodische Öffnen und Schließen der beweglichen Elemente (3, 4) automatisiert und abgestimmt auf die im betreffenden Fließgewässer vorherrschenden hydrologischen Verhältnisse erfolgt.

## Claims

1. A lock for transferring organisms typical to bodies of water between upper water and lower water (8, 9) of flowing bodies of water is equipped with a lock chamber (7), comprising side walls (11) and a floor (10), and implemented as basin-like, whose water level is always less than or equal to that of the upper water, having a upper-water-side lock gate (1), which holds back the upper water up to a desired level, and a lower-water-side lock gate (2), which holds back the water in the lock chamber in relation to the lower water, the upper-water-side and lower-water-side lock gates (1, 2) each comprising a movable element (3, 4) for producing and closing an inlet or outlet opening from the upper or lower water (8, 9) into the lock chamber (7), and the lower-water-side lock gate (2) being provided with at least one permanent lower water passage opening (13), which, in the closed state of the movable element (4) associated with the lower-water-side lock gate (2), penetrates the lower-water-side lock gate (2), **characterized in that** the upper-water-side lock gate (1) is provided with at least one permanent upper water passage opening (12), which is located at least sectionally below the upper water level and, in the closed state of the movable element (3) associated with the upper-water-side lock gate (1), penetrates the lock gate on the upper water side, both the upper-water-side lock gate (1) and also the lower-water-side lock gate (2) extending essentially down to the floor (10) of the lock chamber (7), whose level on its end areas facing toward the upper water side or the lower water side substantially corresponds to the level of the fundamental level of upper water or lower water, respectively.

2. The lock according to Claim 1, **characterized in that** the lower-water-side lock gate (2) is implemented as a fixed blocking wall (14), and the movable element (4) which is associated with the lower-water-side lock gate (2) is implemented as a flap (4) linked to the blocking wall (14), the at least one lower water passage opening (13) being implemented as a passage in the flap (4).

3. The lock according to Claim 1 or 2, **characterized in that** the movable element (3) which is associated with the upper-water-side lock gate (1) is implemented as a blocking wall (3), which is pivotable around a vertical axis (S), and the at least one upper water passage opening (12) is located along the vertical edge (16) of the pivotable blocking wall (3) facing away from the pivot axis (S).

4. The lock according to one of Claims 1 through 3, **characterized in that** the entire clear cross-section of the at least one upper water passage opening (12), which is situated in the upper-water-side lock gate (1), exceeds the entire clear cross-section of the least one lower water passage opening (13), which is situated in the lower-water-side lock gate (2).

5. The lock according to one of Claims 1 through 4, **characterized in that** the clear cross-section of the lower water and upper water passage openings (12, 13) is adjustable.

6. The lock according to one of Claims 1 through 5, **characterized in that** the vertical side walls (11) of the lock chamber (7), which connect the lock gates (1, 2), are curved outward, so that the width of the lock chamber (7) perpendicular to the connection line (A-A) of the two lock gates varies.

7. The lock according to one of Claims 1 through 6, **characterized in that** the floor (10) of the lock chamber (7) has a gradient from the upper water (8) in the direction of the lower water (9).

8. The lock according to Claim 7, **characterized in that** the floor (10) of the lock chamber (7) is provided with a climbing skin.

9. The lock according to one of Claims 1 through 8, **characterized in that** the periodic opening and closing of the movable elements (3, 4) are automated and adapted to the hydrologic conditions prevailing in the relevant flowing body of water with the aid of a time controller.

## Revendications

1. Sas pour le transfert d'organismes typiques d'un cours d'eau entre l'amont et l'aval (8, 9) de cours d'eau avec une chambre de sas (7) en forme de bassin composée de parois latérales (11) et d'un fond (10), dont le niveau d'eau est toujours plus bas ou au même niveau que celui de l'amont, avec une porte de sas (1) du côté de l'amont qui retient l'eau d'amont jusqu'à un niveau souhaité et avec une porte de sas (2) du côté de l'aval qui accumule l'eau contenue dans la chambre de sas par rapport au cours aval, dans lequel la porte de sas d'amont ou d'aval (1, 2) comprend un élément mobile (3, 4) pour ouvrir et fermer une ouverture d'entrée et de sortie vers le cours d'amont ou d'aval (8, 9) dans la chambre de sas (7), et dans lequel la porte de sas d'aval (2) est équipée d'au moins une ouverture de sortie d'eau d'aval permanente (13) qui traverse la porte de sas d'aval (2) quand l'élément mobile (4) associé à la porte de sas d'aval (2) est fermé, **caractérisé en ce que** la porte de sas d'amont (1) est équipée d'au moins une ouverture de passage de l'eau d'amont permanente (12) qui se trouve au moins en partie en dessous du niveau d'eau d'amont et traverse la porte de sas d'amont quand l'élément mobile (3) associé à la porte de sas d'amont (1) est fermé, la porte de sas d'amont (1) et la porte de sas d'aval (2) allant pour l'essentiel jusqu'au fond (10) de la chambre de sas (7) dont le niveau dans ses parties d'extrémité tournées vers l'amont ou vers l'aval correspond pour l'essentiel au niveau de base du cours d'amont ou d'aval.

2. Sas selon la revendication 1, **caractérisé en ce que** la porte de sas d'aval (2) est réalisée comme une cloison de barrage (14) montée à demeure et l'élément mobile (4) associé à la porte de sas d'aval (2) comme un volet (4) articulé sur la cloison de barrage (14), l'au moins une ouverture de passage d'aval (13) étant réalisée comme une ouverture dans le volet (4).

3. Sas selon la revendication 1 ou 2, **caractérisé en ce que** l'élément mobile (3) associé à la porte de sas d'amont (1) est réalisé comme une cloison de barrage (3) capable de pivoter autour d'un axe vertical (S) et l'au moins une ouverture de passage de l'eau d'amont (12) se trouve le long du bord vertical (16) opposé à l'axe de pivotement (S) de la cloison de barrage (3) pivotante.

4. Sas selon l'une des revendications 1 à 3, **caractérisé en ce que** la section libre totale de l'au moins une ouverture de passage de l'eau d'amont (12) disposée dans la porte de sas d'amont (1) est plus grande que la section libre totale de l'au moins une ouverture de passage de l'eau d'aval (13) disposée dans la porte de sas d'aval (2).

5. Sas selon l'une des revendications 1 à 4, **caractérisé en ce que** la section ouverte des ouvertures de passage de l'eau d'amont et d'aval (12, 13) est réglable.

6. Sas selon l'une des revendications 1 à 5, **caractérisé en ce que** les parois latérales (11) verticales de la chambre de sas (7) reliant les portes de sas (1, 2) sont bombées vers l'extérieur, de sorte que la largeur de la chambre de sas (7) varie perpendiculairement à la ligne de liaison (A-A) entre les deux portes de sas.

7. Sas selon l'une des revendications 1 à 6, **caractérisé en ce que** le fond (10) de la chambre de sas (7) présente une déclivité de l'amont (8) vers l'aval (9).

8. Sas selon la revendication 7, **caractérisé en ce que** le fond (10) de la chambre de sas (7) est doté d'une peluche anti-recul.

9. Sas selon l'une des revendications 1 à 8, **caractérisé en ce qu'**à l'aide d'une commande dans le temps, les éléments mobiles (3, 4) sont ouverts et fermés périodiquement de manière automatique et adaptée aux conditions hydrologiques régnant dans le cours d'eau en question.
